# EUROPÄISCHE PATENTANMELDUNG

(11) **EP 1 574 842 A1**
(43) Veröffentlichungstag der Anmeldung: **14.09.2005**
(21) Anmeldenummer: 05003548.4
(22) Anmeldetag: 18.02.2005
(51) Int. Cl.: G01N 21/21, G06T 7/00

(54) **Ellipsometrisches Messverfahren mit Korrektur durch Bildregistrierung**

(30) Priorität: 12.03.2004 DE 102004012125
(71) Anmelder: Nanofilm Technologie GmbH, 37081 Göttingen (DE)
(72) Erfinder: Sturm, Kai, 37073 Göttingen (DE); Hönig, Dirk, Dr., 37081 Göttingen (DE)
(74) Vertreter: Schneider, Peter Christian

(57) **Zusammenfassung**

Bildgebendes, ellipsometrisches Messverfahren, bei dem nacheinander eine Mehrzahl von Einzelbildern, die jeweils wenigstens einen Teil eines Objektes repräsentieren, mittels eines bildgebenden Detektors unter unterschiedlichen, ellipsometrisch relevanten Aufnahmebedingungen aufgenommen (102, 108), in einer digitalen Speichereinheit wenigstens temporär gespeichert und wenigstens ausschnittweise nach vorgegebenen Regeln miteinander zur Erzeugung eines Ergebnisbildes oder -wertes verrechnet (126) werden,
dadurch gekennzeichnet, dass
- in einem Referenzbild anhand von Bildinformationsparametern eine Interessenregion ROI definiert und ihre Position und / oder Form in einem ersten Einzelbild ermittelt wird (104),
- in einem zweiten Einzelbild die Position und / oder Form der ROI anhand der gleichen Bildinformationsparameter ermittelt wird (112),
- das zweite Einzelbild durch Translation, Rotation, Stauchung und / oder Streckung wenigstens ausschnittweise derart korrigiert wird (122), dass die Position und / oder Form der ROI in dem zweiten Einzelbild mit der Position und / oder Form der ROI in dem ersten Einzelbild übereinstimmt, und
- korrespondierende Bildpunkte oder -bereiche der positions- und / oder formkorrigierten Einzelbilder miteinander zur Erzeugung des Ergebnisbildes oder -wertes verrechnet werden (126).

## Beschreibung

Die Erfindung bezieht sich auf ein bildgebendes, ellipsometrisches Messverfahren, bei dem nacheinander eine Mehrzahl von Einzelbildern, die jeweils wenigstens einen Teil eines Objektes repräsentieren, mittels eines bildgebenden Detektors unter unterschiedlichen, ellipsometrisch relevanten Aufnahmebedingungen aufgenommen, in einer digitalen Speichereinheit wenigstens temporär gespeichert und wenigstens ausschnittweise nach vorgegebenen Regeln miteinander zur Erzeugung eines Ergebnisbildes oder -wertes verrechnet werden.

Bei derartigen Verfahren wird z.B. der Polarisationswinkel eines das Objekt bestrahlenden Beleuchtungslichtes vor der Aufnahme jedes Teilbildes geändert. Andere ellipsometrisch relevante Aufnahmeparameter sind z.B. die Wellenlänge des Beleuchtungslichtes, sein Einfallswinkel, die Winkeleinstellung eines dem Detektor vorgeschalteten Analysators etc. Im Ergebnis erzielt man einen sogenannten Bildstapel von Einzelbildern, die wenigstens ausschnittweise miteinander verrechnet werden. Dabei ist es das Ziel, jeweils diejenigen Bildpunkte oder Bildbereiche der Einzelbilder, die denselben Objektpunkt oder Objektbereich repräsentieren, miteinander zu verrechnen. Im Rahmen dieser Anmeldung werden die denselben Objektpunkt oder Objektbereich repräsentierenden Bildpunkte oder Bildbereiche in den Einzelbildern als korrespondierende Bildpunkte oder Bildbereiche bezeichnet.

Das Resultat einer derartigen Berechnung kann ein berechnetes Ergebnisbild sein, in dem Werte, die aus korrespondierenden Bildpunkten oder -bereichen berechnet wurden, in geeigneter Weise farb- oder kontrastcodiert den entsprechenden korrespondierenden Bildpunkten oder -bereichen des Ergebnisbildes zugewiesen werden. Das Ergebnisbild visualisiert die räumliche Verteilung der Ergebniswerte der Einzelbildwerte. Beispielsweise wird eine Probe unter einem zur Probennormalen geneigten Winkel mit Beleuchtungslicht einstellbarer Polarisationseigenschaften flächig beleuchtet und unter einem ebenfalls zur Probennormalen geneigten Reflexionswinkel an der Probe reflektiertes Licht wird einer bildgebenden, polarisationssensitiven Detektoreinrichtung zugeführt. Während einer Messung können ein oder mehrere Beleuchtungs- und / oder Detektionsparameter geändert werden. Beispielsweise können Beleuchtungs- und Detektionswinkel, Wellenlänge des Beleuchtungslichtes, Polarisationseigenschaften des Beleuchtungslichtes, Filtereigenschaften der polarisationssensitiven Detektoreinrichtung etc. variiert werden. Die Variation erfolgt in der Regel schrittweise, wobei im Anschluss an jeden Variationsschritt ein Einzelbild aufgenommen wird. Der sich ergebende Bildstapel kann dann genutzt werden, um beispielsweise die ellipsometrischen Größen Ψ und / oder Δ für jeden Bildpunkt oder Bildbereich zu berechnen und im Ergebnisbild darzustellen.

Bei einer anderen Variante kann das Resultat der Berechnung ein einzelner Wert sein, der sich aus einer integrierenden Verrechnung korrespondierender Bildbereiche in den Einzelbildern ergibt.

US 5,076.696 offenbart ein gattungsgemäßes bildgebendes, ellipsometrisches Verfahren, bei dem eine Vielzahl von Einzelbildern unter jeweils unterschiedlichen, ellipsometrisch relevanten Aufnahmebedingungen aufgenommen und zur Erstellung von Ergebnisbildern, sog. Ellipsogrammen, miteinander verrechnet werden. Der Berechnung der Ellipsogramme werden die aufgenommenen Intensitätsverteilungen in den Einzelbildern und die bekannten Geräteeinstellungen zugrunde gelegt.

Nachteilig dabei ist, dass sich, unabhängig von der speziellen Form des erwünschten Resultats, häufig das Problem der Verzerrung und / oder Fehlpositionierung des Objektes in einigen Einzelbildern im Vergleich zu anderen Einzelbildern stellt. Derartige "Fehler" können statistischer Natur sein oder systematisch und durch das angewandte Messverfahren begründet. Bei der Ellipsometrie ergeben sich z.B. systematische Verzerrungen, wenn im Rahmen einer Messung Einfalls- und Reflexionswinkel variiert werden.

US 5,141,311 offenbart ein weiteres bildgebendes Ellipsometrie-System und Verfahren zur Untersuchung dünner Schichten. Zur Verbesserung des Auflösungsvermögens wird das zu untersuchende Schichtsystem auf einem mit Metall oder einem Halbleiter beschichteten Träger angeordnet. Dies führt zu einer effizienten Dämpfung der sich in dem Schichtsystem ausbildenden Lichtleitermoden. An einem Punkt der Probe einfallendes Licht verteilt sich daher seitlich weniger weit in der Probe. Zur Vermeidung oder Kompensation von Verzerrungen der miteinander zu verrechnenden Einzelbilder ist das Verfahren jedoch nicht geeignet.

US 2003/0128360 A1 offenbart ein punktweise arbeitendes ellipsometrisches Verfahren, bei dem Einfallswinkelfehler, die durch Unebenheiten der Probenoberfläche hervorgerufen werden, durch eine Translations- und/oder Kippbewegungen des Probentisches kompensiert werden. Dieses Verfahren ist mechanisch sehr aufwendig und führt bei punktweiser ellipsometrischer Vermessung größerer Flächen zu nicht hinnehmbar langen Messzeiten.

US 6,052,188 offenbart ein Ellipsometrieverfahren mit spektralem Auflösungsvermögen.

Aufgabe der vorliegenden Erfindung ist es, ein gattungsgemäßes Verfahren derart weiterzubilden, dass trotz mechanischer und / oder optischer Störeinflüsse verzerrungsfreie Ergebnisbilder erzeugt werden.

Diese Aufgabe wird in Verbindung mit den Merkmalen des Oberbegriff von Anspruch 1 dadurch gelöst, dass
- in einem Referenzbild anhand von Bildinformationsparametern eine Interessenregion (im folgenden "ROI" genannt) definiert und ihre Position und / oder Form in einem ersten Einzelbild ermittelt wird,
- in einem zweiten Einzelbild die Position und / oder Form der ROI anhand der gleichen Bildinformationsparameter ermittelt wird,
- das zweite Einzelbild durch Translation, Rotation, Stauchung und / oder Streckung wenigstens ausschnittweise derart korrigiert wird, dass die Position und / oder Form der ROI in dem zweiten Einzelbild mit der Position und / oder Form der ROI in dem ersten Einzelbild übereinstimmt, und
- korrespondierende Bildpunkte oder -bereiche der positions- und / oder formkorrigierten Einzelbilder miteinander zur Erzeugung des Ergebnisbildes oder - wertes verrechnet werden.

Grundidee der vorliegenden Erfindung ist es, anstatt auf externe Positionsparameter zu vertrauen, die Positions- und Verzerrungsinformation aus den Teilbildern, d.h. aus der in ihnen gespeicherten Bildinformation, zu ermitteln. Die ROI kann zwar grundsätzlich mit dem gesamten Einzelbild übereinstimmen, günstiger ist es jedoch, wenn als ROI lediglich gut definierbare, verhältnismäßig kleine Bildausschnitte gewählt werden. Eine ROI kann als gut definierbar angesehen werden, wenn sie sich in bestimmten Bildinformationsparametern deutlich von anderen Bereichen des Teilbildes unterscheidet. Als nutzbare Bildinformationsparameter kommen dabei beispielsweise Kontrast-, Intensitäts-, Farb- und / oder Forminformationen in Frage. So kann beispielsweise ein Bereich, der einen besonderen Kontrast zu benachbarten Bildbereichen aufweist, als ROI definiert und hinsichtlich Form und Position analysiert werden. Referenzbild und erstes Einzelbild können unterschiedlich oder identisch sein. Letzteres ist beispielsweise der Fall, wenn als Referenzbild das erste Einzelbild einer im Rahmen einer Messung aufzunehmenden Folge von Einzelbildern verwendet wird. In einem zweiten Einzelbild wird dann anhand desselben Parameters, d.h. hier des Kontrasts, dieselbe ROI ermittelt. Diese kann sich jedoch aufgrund optischer Verzerrungen oder mechanischer Fehlpositionierung hinsichtlich ihrer Form und / oder Position von der ROI des ersten Einzelbildes unterscheiden. Erfindungsgemäß erfolgt eine Anpassung des Gesamtbildes bis eine Form- und Positionsübereinstimmung der ROIs in dem ersten und in dem zweiten Einzelbild erreicht ist.

Die zur Übereinstimmung der ROIs erforderliche Anpassung kann auf das gesamte zweite Einzelbild angewendet werden. Selbstverständlich ist es jedoch auch möglich, die Anpassung nur für einen definierten Ausschnitt des Einzelbildes, insbesondere die ROI selbst, zu verwenden.

Weitere Einzelbilder werden günstiger Weise analog behandelt, wobei dann als Referenzbild das zuerst aufgenommene Referenzbild oder aber ein später aufgenommenes Einzelbild, insbesondere das jüngst aufgenommene Einzelbild verwendet werden kann.

Zur Erleichterung der ROI-Definition kann die Probe sog. Marker enthalten, die bei der Probenpräparation eingebracht werden und sich von der übrigen Probe in deutlicher Weise, etwa durch Farbe, Form, Reflexionsvermögen etc. unterscheiden. Alternativ oder in Kombination können auch bekannte Eigenschaften des Beleuchtungslichtes zur ROI-Definition genutzt werden. Ist beispielsweise bekannt, dass das Beleuchtungslicht von der Beleuchtungsoptik auf einen streifenförmigen Bereich der Probe gelenkt wird, kann die ROI als in etwa streifenförmiges, zusammenhängendes Gebiet zwischen zwei Grenzlinien, die z.B. durch einen (relativen oder absoluten) Helligkeitsschwellenwert gegeben sind, definiert werden.

Zur Ermittlung der Position und / oder Form der ROI in einem Einzelbild kann bei einer günstigen Ausführungsform der Erfindung ein Kantensuch-Bildverarbeitungsalgorithmus, der auf dem relevanten Bildinformationsparameter beruht, auf das Einzelbild angewendet werden. Auf diese Weise wird von jedem Einzelbild ein binäres Zwischenbild erzeugt und der Form- und / oder Positionsanpassungsprozess erfolgt anhand der binären Bilder. Das Ergebnis des Anpassungsprozesses kann dann auf die Original-Einzelbilder angewandt werden. Dies hat den Vorteil, dass aufgrund der besonders geringen Datenmenge binärer Bilder der Anpassungsprozess mit besonders geringem Rechenaufwand und daher besonders schnell erfolgen kann.

Bei der bildgebenden Ellipsometrie kann es innerhalb einer Folge von im Rahmen der Messung aufgenommenen Einzelbildern zu Kontrastinversion von Bildinformationsparametern, die sich besonders zur Definition einer ROI eignen, kommen. Soll beispielsweise eine räumlich begrenzte Beschichtung von Biomolekülen auf einem Substrat ellipsometrisch untersucht werden, können bestimmte Winkel-, Wellenlängen- oder Polarisationseinstellungen zu einer Kontrastmaximierung zwischen Beschichtung und Trägersubstrat führen, während andere Winkel-, Wellenlängen- oder Polarisationseinstellungen zu einer Kontrastminimierung oder gänzlichem Verschwinden des Kontrastes führen. Wird im Rahmen der Messung der entsprechende Messparameter durchgefahren, wobei zu unterschiedlichen Einstellungen jeweils ein Einzelbild aufgenommen wird, weisen ein oder mehrere Teilbilder einen minimierten oder verschwindenden Kontraste auf. Wurde zuvor jedoch die ROI anhand dieses Kontrastes definiert, stößt das erfindungsgemäße Verfahren auf Probleme, wenn das kontrastminimierte Einzelbild als zweites Einzelbild im Sinne von Anspruch 1 verwendet wird.

Eine vorteilhafte Weiterbildung des Verfahrens kann dadurch Abhilfe schaffen, dass unter Verwendung der in dem ersten Einzelbild ermittelten Position und / oder Form der ROI und der in dem zweiten Teilbild ermittelten Position und / oder Form der ROI eine auf ein drittes Einzelbild anzuwendende (mittelbare oder unmittelbare) Positions- und / oder Formkorrektur interpoliert oder extrapoliert wird. Dies bedeutet, dass als zweites Einzelbild ein weiteres Einzelbild verwendet wird, in welchem der Wert des die ROI definierenden Bildinformationsparameters geeignet ist, daraus die ROI zu ermitteln. Die Form und Position der ROI in dem dritten (z.B. kontrastminimierten) Einzelbild kann dann durch Interpolation zwischen dem ersten und zweiten Einzelbild oder durch Extrapolation aus dem ersten und zweiten Einzelbild ermittelt werden. Günstigerweise verwendet man dem dritten Einzelbild benachbarte Einzelbilder als Stützpunkte der Interpolation oder Extrapolation. Alternativ können auch zunächst die auf das erste und zweite Einzelbild anzuwendenden Korrekturparameter berechnet und daraus die auf das dritte Einzelbild anzuwendenden Korrekturparameter interpoliert oder extrapoliert werden.

Neben der einfachen, linearen Interpolation oder Extrapolation lassen sich auch kompliziertere Interpolations-oder Extrapolationsverfahren anwenden, wenn beispielsweise eine systematische Abhängigkeit der Bildverzerrung von experimentellen Bedingungen bekannt ist. Dies könnte beispielsweise bei der Änderung des Einfallswinkels des Beleuchtungslichtes und des entsprechenden Reflexionswinkels im Rahmen einer ellipsometrischen Messung der Fall sein.

Bei einer vorteilhaften.Ausführungsform des erfindungsgemäßen Verfahrens kann vorgesehen sein, dass die Verrechnung mehrerer Einzelbilder oder Ausschnitte davon eine mathematische Operation umfasst, die auf eine Folge von Daten angewendet wird, welche gemittelten Werten von Bildpunkten entsprechen, die zu miteinander korrespondierenden ROIs in mehreren Positions- und / oder formkorrigierten Einzelbildern gehören. Das bedeutet, dass als miteinander zu verrechnende Dateneinheiten integrierte Werte über bestimmte Bildbereiche verwendet werden können. Dieses Verfahren bietet sich insbesondere bei lichtschwachen Anwendungen an, in denen das relative Rauschen durch Integration mehrerer Bildpunkte reduziert werden kann.

Um zu vermeiden, dass eine suboptimale Form- und / oder Positionskorrektur der miteinander zu verrechnenden Einzelbilder bzw. ROIs zu übermäßigen Fehlern am Rande der ROIs führt, kann bei einer vorteilhaften Weiterbildung der vorgenannten Verfahrensvariante vorgesehen sein, dass in die Mittelung von Bildpunktwerten in jedem Einzelbild nur solche Bildpunkte einbezogen werden, die einen vordefinierten Mindestabstand zur Außengrenze ihrer jeweiligen ROI einhalten oder diesen überschreiten. Mit anderen Worten wird nur ein innerer Bereich der ROIs zur Mittelung herangezogen, während die kritischen Randbereiche der ROIs ausgespart werden. Bei der Definition der ROIs ist es möglich, sowohl ein einzelnes, zusammenhängendes Gebiet als eine ROI zu definieren, als auch mehrere, nicht zusammenhängende Bereiche als eine ROI zu definieren. Dabei kann es vorteilhaft sein, wenn eine anhand von Bildinformationsparametern definierte ROI durch manuelle Interaktion über eine graphische Benutzerschnittstelle modifizierbar ist. So kann es beispielsweise sein, dass die abstrakte Definition der ROI anhand bestimmter Bildinformationsparameter zu einer ROI führt, die aus einer Vielzahl, nicht zusammenhängender Bildbereiche besteht, von denen jedoch nur einer oder wenige bei der aktuellen Messung von Interesse sind. Wird das als Definitionsreferenz für die ROI dienende erste Einzelbild dann auf einem Monitor dargestellt, hat der Benutzer bei dieser Verfahrensvariante die Möglichkeit, durch grundsätzlich bekannte Aktionen im Rahmen einer graphischen Benutzerschnittstelle die ROI-Definition in für die Messung optimierter Weise zu modifizieren.

Ein weiteres Problem kann auftreten, wenn die optischen und / oder mechanischen Fehler, die zu einer Verzerrung und / oder Fehlpositionierung führen, so groß sind, dass die in einem ersten Einzelbild definierte ROI in einem zweiten Teilbild nicht ermittelt werden kann, da sie nicht vollständig in den Grenzen des zweiten Einzelbildes enthalten ist. Eine vorteilhafte Weiterbildung des erfindungsgemäßen Verfahrens sieht in diesem Fall vor, dass dieses Einzelbild verworfen und ein Alternativ-Einzelbild aufgenommen und dem weiteren Verfahren zugrunde gelegt wird, wobei vor Aufnahme des Alternativ-Einzelbildes eine automatische Repositionierung des Objektes erfolgt, sodass die in dem Alternativ-Einzelbild zu ermittelnde ROI vollständig innerhalb des Alternativ-Einzelbildes liegt. Das Verfahren erkennt also automatisch, dass die Fehlpositionierung so groß ist, dass die zu ermittelnde ROI wenigstens teilweise außerhalb der Grenzen eines Einzelbildes liegt. Durch geeignete Bildanalysealgorithmen, die dem Fachmann grundsätzlich bekannt sind, kann anhand des innerhalb der Grenzen des zweiten Einzelbildes verbliebenden Teile der ROI der Positionierungsfehler in etwa ermittelt werden. Nach geeigneter, kompensatorischer Repositionierung der Probe relativ zur Aufnahmeoptik kann dann ein neues Bild aufgenommen werden, mit welchem das Verfahren in der vorgesehenen Weise fortgesetzt werden kann.

Eine vorteilhafte weiterbildung des erfindungsgemäßen Verfahrens sieht vor, dass eine mathematische Operation auf eine Folge von Daten angewendet wird, welche den Werten von miteinander korrespondierenden Bildpunkten in mehreren zusammengesetzten Gesamtbildern entsprechen. Ein Beispiel hierfür wäre etwa die Bestimmung der Größen Δ und Ψ, aus einer Mehrzahl von Einzelbildern, die jeweils aus einer Mehrzahl von Teilbildern aufgebaut ist, die beispielsweise aus sukzessiver Beleuchtung und Aufnahme von Teilbereichen der Probe resultieren.

Günstiger Weise werden die Teilbilder vor dem Zusammensetzen gemäß dem Grundprinzip der vorliegenden Erfindung korrigiert. Dies bedeutet insbesondere, dass
- in einem Referenzbild anhand von Bildinformationsparametern eine Interessenregion (ROI) definiert und ihre Position und / oder Form in einem ersten Teilbild ermittelt wird,
- in einem zweiten Teilbild die Position und / oder Form der ROI anhand der gleichen Bildinformationsparameter ermittelt wird und
- das zweite Teilbild durch Translation, Rotation, Stauchung und / oder Streckung wenigstens ausschnittweise derart korrigiert wird, dass die Position und / oder Form der ROI in dem zweiten Teilbild mit der Position und / oder Form der ROI in dem ersten Teilbild übereinstimmt.
Weitere Vorteile der Erfindung ergeben sich aus der nachfolgenden speziellen Beschreibungen und den Zeichnungen, in denen
- Figur 1:: ein vereinfachtes Flussdiagramm einer vorteilhaften Ausführungsform des erfindungsgemäßen Verfahrens darstellt,
- Figur 2:: eine schematisches Darstellung eines Bildstapels zeigt,
- Figur 3:: eine schematische Darstellung zur Veranschaulichung der erfindungsgemäßen Interpolation zeigt,
- Figur 4:: eine schematische Darstellung zur Verdeutlichung der Objektverzerrung zeigt,
- Figur 5:: eine schematische Darstellung zur Verdeutlichung der Objektwanderung zeigt und
- Figur 6:: eine schematische Darstellung zur Verwendung des erfindungsgemäßen Verfahrens in einer ellipsometrischen Messvorrichtung zeigt.

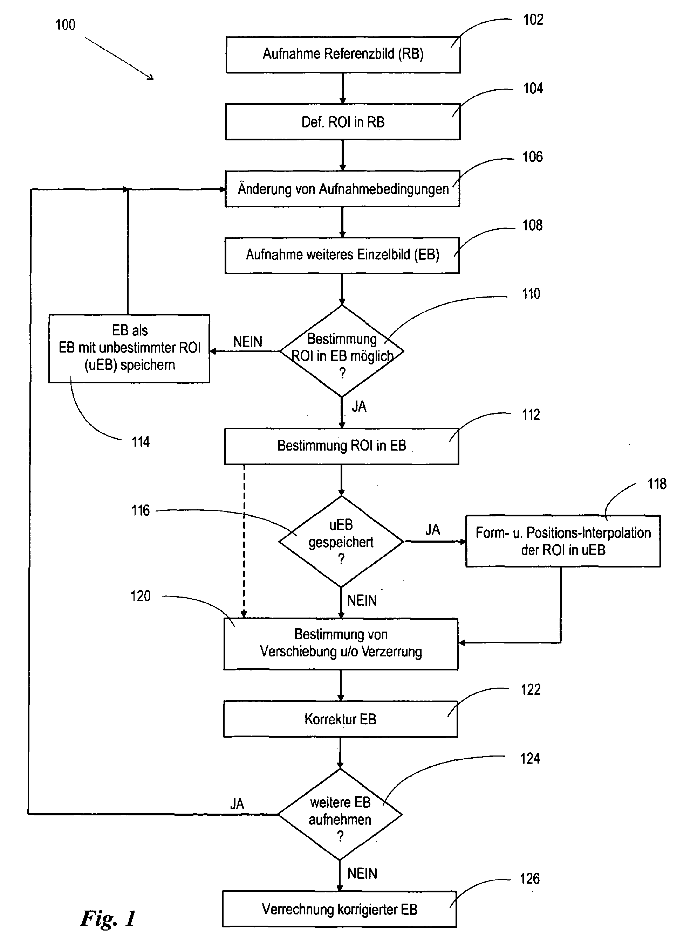

Figur 1 stellt in einem Flussdiagramm 100 eine besonders günstige Ausführungsform des erfindungsgemäßen Verfahrens dar. Die Darstellung erfolgt aus Gründen der Anschaulichkeit schematisch und stark vereinfacht. Einige mögliche Variationen sollen ebenfalls im Rahmen der Beschreibung von Figur 1 erläutert werden.

Zunächst wird in Schritt 102 ein Referenzbild (RB) aufgenommen. Als Referenzbild eignet sich insbesondere das erste Einzelbild einer im Rahmen einer Messung aufzunehmenden Folge von Einzelbildern. Alternativ kann auch ein gesondertes Referenzbild, z.B. anhand einer besonderen Referenzprobe, aufgenommen werden, welches von der eigentlichen Messung unabhängig ist.

In diesem aufgenommenen Referenzbild wird bei Schritt 104 wenigstens eine Interessenregion (ROI) anhand von in dem Referenzbild enthaltenen Bildinformationsparametern definiert und hinsichtlich ihrer Position und Form bestimmt. Als Bildinformationsparameter eignet sich beispielsweise ein besonderer Kontrast. Der eigentliche Definitionsvorgang kann, je nach Ausführungsform der Erfindung, unterschiedlich ausfallen. Eine Möglichkeit ist, anhand von vordefinierten Schwellenwerten für relevante Bildinformationsparameter eine Definition automatisch z.B. von einem zur Ausführung des Verfahrens verwendeten Computers durchführen zu lassen. Bei einer günstigen Weiterbildung dieser Variante wird die ermittelte ROI in dem Referenzbild dem Benutzer angezeigt und es wird ihm die Möglichkeit gegeben, über eine graphische Benutzerschnittstelle Modifikationen der automatisch definierten ROI vorzunehmen. Eine andere Variante zur ROI-Definition ist, anhand des dargestellten Referenzbildes zunächst manuell über eine graphische Benutzerschnittstelle interessierende Bildbereiche zu markieren. Der Computer kann dann Gemeinsamkeiten der markierten Bildbereiche und / oder Unterschiede zu nicht markierten Bildbereichen ermitteln und daraus eine ROI-Definition als Funktion relevanter Bildinformationsparametern erstellen. Außer Schwellenwerten, die relativer oder absoluter Natur sein können, können auch andere Eigenschaften der relevanten Bildinformationsparameter zur Definition der ROI genutzt werden. Beispiele hierfür wären etwa Abstände, zusammenhängende Flächen, Strukturen, geschlossene Linien etc. Als Ergebnis liefert Schritt 104 eine Definition einer ROI als Funktion bestimmter Bildinformationsparameter.

Im nachfolgenden Schritt 106 werden zur Vorbereitung der Aufnahme eines weiteren Einzelbildes (EB) in Schritt 108 die Bedingungen für die Aufnahme des weiteren Einzelbildes verändert. Bei einer ellipsometrischen Messung können dies Änderungen des Einfalls- bzw. Reflexionswinkels, der Wellenlänge, der Polarisationseigenschaften des Beleuchtungslichtes oder der Einstellungen eines Analysators im Detektionsstrahlengang sein. Auch ist es beispielsweise möglich, vor der Aufnahme des nächsten Einzelbildes die Probe selbst relativ zur Detektionsoptik zu verschieben oder die Beleuchtungsoptik so zu variieren, dass andere Probenbereiche beleuchtet werden.

Nach der Aufnahme des weiteren Einzelbildes in Schritt 108 wird in Schritt 110 ermittelt, ob eine Bestimmung der ROI gemäß der in Schritt 104 festgelegten Definition in dem neuen Einzelbild möglich ist. Kann in dem neu aufgenommenen Einzelbild keine ROI bestimmt werden (beispielsweise weil ein bestimmter Kontrast aufgrund der Änderung der Aufnahmebedingungen in dem neuaufgenommenen Einzelbild einen Nulldurchgang aufweist, d.h. verschwindet), wird dieses Einzelbild in Schritt 114 als Einzelbild mit unbestimmter ROI (uEB) zwischengespeichert und das Verfahren kehrt zurück zu Schritt 106, wo die Vorbereitungen für die Aufnahme eines weiteren Einzelbildes getroffen werden. Anderenfalls wird in Schritt 112 die Bestimmung der ROI in dem aktuellen Einzelbild durchgeführt.

Bei einer besonders einfachen Ausführungsform der Erfindung, die in Figur 1 als gestrichelter Pfeil dargestellt ist, wird unmittelbar nach Bestimmung der ROI (Schritt 112) in Schritt 120 deren Verschiebung und / oder Verzerrung bestimmt. Dies erfolgt beim ersten Durchlauf des Verfahrens durch Vergleich mit dem in Schritt 102 aufgenommenen Referenzbild RB bzw. mit der in Schritt 104 darin bestimmten ROI. Bei weiteren Durchläufen des Verfahrens, d.h. bei der Behandlung weiterer Einzelbilder kann erneut Bezug auf das Referenzbild RB genommen werden. Alternativ kann die Verschiebung und / oder Verzerrung in dem aktuellen Einzelbild auch durch Vergleich mit einem vorangehenden (auswertbaren) Einzelbild bzw. der ROI darin bestimmt werden. Anhand der bestimmten Verschiebung und / oder Verzerrung kann dann in Schritt 122 eine Korrektur des aktuellen Einzelbildes oder eines Ausschnitts davon (z.B. der ROI) vorgenommen werden.

Sollen weitere Einzelbilder aufgenommen werden, was in Schritt 124 geprüft wird, kehrt das Verfahren zurück zu Schritt 106. Sollen dagegen keine weiteren Einzelbilder aufgenommen werden, können die korrigierten Einzelbilder in Schritt 126 je nach Aufgabenstellung miteinander verrechnet werden, etwa durch Anwendung einer mathematischen Operation auf korrespondierende Pixel eines Einzelbildstapels oder durch Zusammensetzung mehrerer Einzelbilder als Teilbilder zu einem Gesamtbild.

Bei einer etwas aufwendigeren Variante des Verfahrens, die jedoch günstiger ist, wenn im Laufe der Messung Nulldurchgänge relevanter Bildinformationsparameter zu erwarten sind, wird im Anschluss an die Bestimmung der ROI in Schritt 112 in Schritt 116 festgestellt, ob Einzelbilder mit unbestimmter ROI zwischengespeichert sind. Ist dies nicht der Fall, geht der Verfahrensablauf wie oben beschrieben zu Schritt 120 über. Sind jedoch Einzelbilder mit unbestimmter ROI zwischengespeichert, erfolgt in Schritt 118 eine Form- und / oder Positions-Interpolation der ROI in dem zwischengespeicherten Einzelbild. Dies bedeutet, dass die Form und / oder Position der ROI in dem zwischengespeicherten Einzelbild unter Zuhilfenahme wenigstens einer bestimmen ROI in einem zuvor aufgenommen Einzelbild und wenigstens einer bestimmten ROI in einem nach dem zwischengespeicherten Bild aufgenommenen Einzelbild geschätzt wird. Diese Schätzung ersetzt dann die zuvor als unmöglich erkannte Bestimmung der ROI in dem zwischengespeicherten Einzelbild und das Verfahren geht weiter zu Schritt 120, wo das Einzelbild mit interpolierter ROI wie ein reguläres Einzelbild mit bestimmter ROI behandelt wird.

Alternativ zu der in Figur 1 erwähnten Interpolation kann eine unbestimmbare ROI auch mittels einer Extrapolation ermittelt werden, wobei zur Abschätzung mehrere vor oder mehrere nach dem kritischen Einzelbild aufgenommene Einzelbilder herangezogen werden. Man beachte, dass die Ausdrücke "vor" und "nach" in diesem Zusammenhang nicht notwendig zeitlich zu verstehen sind. Vielmehr sind sie im Hinblick auf das Verhalten des relevanten Bildinformationsparameters als Funktion der Änderung der Aufnahmebedingungen zu verstehen. Als Beispiel möge ein Kontrast dienen, der beim monotonen Durchfahren des Polarisationswinkels bei einer ellipsometrischen Messung zunächst abnehmen, dann verschwinden und schließlich wieder zunehmen kann.

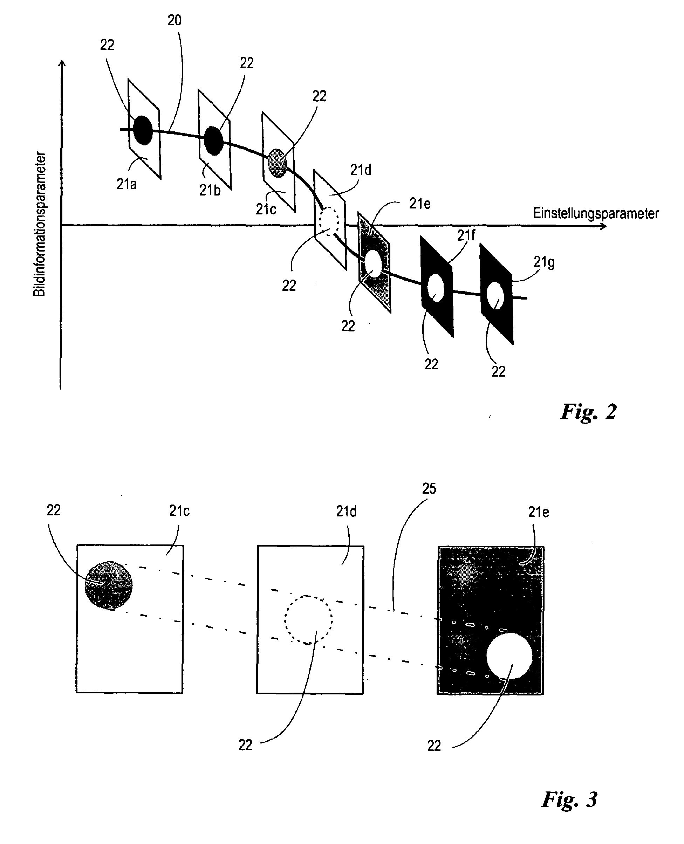

Zur Veranschaulichung zeigt Figur 2 schematisch einen Bildstapel auf dem ebenfalls schematisierten Graphen eines Bildinformationsparameters (z.B. ein Kontrast, wie in Figur 2 angedeutet) als Funktion eines experimentellen Einstellungsparameters. Der Kontrast erfährt bei diesem Beispiel in dem Einzelbild 21d einen Nulldurchgang, so dass die kreisförmig dargestellt ROI 22 in diesem Einzelbild nicht ermittelbar ist. Figur 3 veranschaulicht dann die erfindungsgemäße Interpolation, wobei angenommen wird, dass von Einzelbild zu Einzelbild lediglich eine Probenwanderung ohne Verzerrung auftritt. Die Position der ROI 22 kann in den Einzelbilder 21c und 21e, welche einen ausreichenden Kontrast aufweisen, exakt ermittelt werden. Im vorliegenden Fall wird die Position der nicht bestimmbaren ROI 22 in Einzelbild 21d durch lineare Interpolation ermittelt. Selbstverständlich sind auch andere komplexere Interpolations- oder Extrapolationsverfahren denkbar.

Bei den gezeigten Ausführungsbeispielen wird die Form bzw. Position einer nicht bestimmbaren ROI geschätzt und daraus die geeignete Korrektur für das entsprechende Einzelbild berechnet. Andererseits ist auch eine direkte Interpolation der Korrekturparameter möglich. Das bedeutet, dass zunächst in den Einzelbildern mit bestimmbarer ROI die erforderliche Korrektur im Sinne von Translations-, Rotations-, Stauchungs- und / oder Streckungsparametern bestimmt wird und diese Parameter zur Korrektur des Einzelbildes mit nicht bestimmbarer ROI interpoliert oder extrapoliert werden. Beide Verfahrensvarianten sollen von dem hier verwendeten Ausdruck der (unmittelbaren bzw. mittelbaren) Interpolation bzw. Extrapolation einer anzuwendenden Positions- und / oder Formkorrektur erfasst sein.

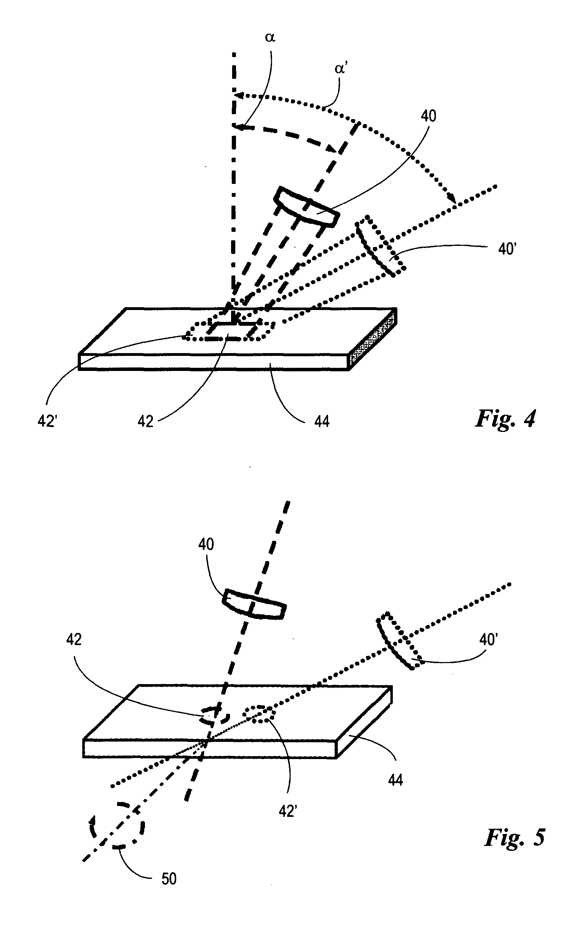

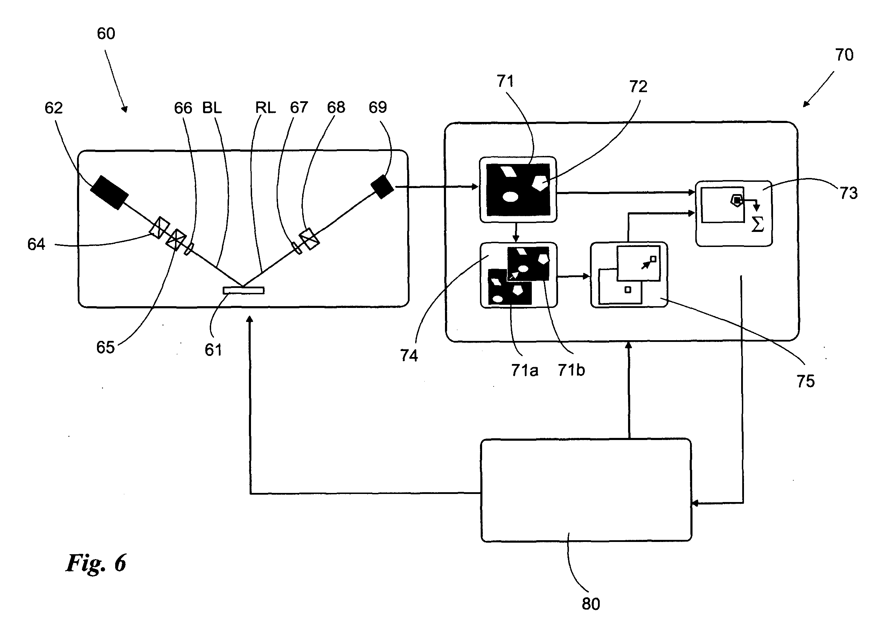

Figuren 4 und 5 zeigen schematisch mögliche Auswirkungen der Änderung eines Relativwinkels α bzw. α' einer Detektionsoptik 40 bzw. 40' im Verhältnis zu einem Probenbereich 42 bzw. 42', der als Teil einer dünnen Schicht auf einem Trägersubstrat 44 aufgebracht ist. Figur 4 veranschaulicht die resultierende Verzerrung, während Figur 5 eine scheinbare Probenwanderung veranschaulicht. Die scheinbare Probenwanderung tritt auf, weil die tatsächliche Drehachse, um welche die Winkel a und a' drehen, unterhalb der betrachteten Probenoberfläche liegt, wie in Figur 5 durch den Drehungspfeil 50 angedeutet ist. Im Hinblick auf das erfindungsgemäße Verfahren ist die in Figur 5 dargestellte scheinbare Objektwanderung einer tatsächlichen Objektwanderung vergleichbar.

Figur 6 zeigt schematisch eine Vorrichtung zur ellipsometrischen Messung einer Probe unter Verwendung des erfindungsgemäßen Verfahrens. In einem Ellipsometer 60 wird eine Probe 61 mittels einer Lichtquelle 62, vorzugsweise eines Lasers, mit Beleuchtungslicht BL einstellbarer Positionseigenschaften beleuchtet. Günstigerweise verwendet man hierzu einen Polarisator 64, einen nachgeschalteten Kompensator 65 und eine geeignete Beleuchtungsoptik 66. Die Probe 61 wird von dem Beleuchtungslicht BL unter einem zur Probennormalen geneigten Winkel beleuchtet. Entsprechend ergibt sich ein zur Probennormalen geneigter Reflexionswinkel unter welchem Reflexionslicht RL von der Probe 61 über eine geeignete Abbildungsoptik 67 und einen Analysator 68 auf einen bildgebenden Detektor 69 fällt. Abbildungsoptik 67, Analysator 68 und bildgebender Detektor 69 können als polarisationssensitive Detektionseinheit zusammengefasst werden. Von einem Bildverarbeitungssystem 70, welches als eigenes Modul oder eingebettet in ein komplexeres System ausgeführt sein kann, werden die von dem Detektor 69 aufgenommenen Einzelbilder 71 wenigstens zwischengespeichert. Im dargestellten Ausführungsbeispiel wird eine fünfeckig dargestellte Fläche als ROI 72 verwendet, wobei, wie in dem Kasten 73 angedeutet, die Summe der in dieser Fläche enthaltenden Bildpunkte für die weitere Auswertung relevant ist. Wie in Kasten 74 dargestellt, werden in mehreren nacheinander aufgenommen Teilbildern 71a und 71b zunächst die ROIs und daraus die relative Verschiebung der Einzelbilder 71a und 71b bestimmt. Diese Verschiebung kann durch geeignete Kompensationsalgorithmen korrigiert werden (Kasten 75), so dass zur gewünschten Berechnung, nämlichen der oben genannten Summenbildung die richtigen Bildpunkte, nämlich die den jeweiligen ROIs zuzuordnenden, in geeigneter Weise miteinander verrechnet werden können. Günstigerweise erfolgt die Ansteuerung der Messapparatur, die Steuerung des Bildverarbeitungsverfahrens und die nachfolgende Datenauswertung über einen Computer 80.

Natürlich stellen die anhand der Figuren und der speziellen Beschreibung erläuterten Ausführungsformen der vorliegenden Erfindung lediglich illustrative Beispiele dar. Insbesondere der Aufbau der speziellen Messapparatur, die Abfolge einzelner Verfahrensschritte und die konkrete Programmierung erforderlicher Algorithmen sind auf Basis der vorliegenden Offenbarung je nach konkreter Zielsetzung variierbar.

## Patentansprüche

1. Bildgebendes, ellipsometrisches Messverfahren, bei dem nacheinander eine Mehrzahl von Einzelbildern, die jeweils wenigstens einen Teil eines Objektes repräsentieren, mittels eines bildgebenden Detektors unter unterschiedlichen, ellipsometrisch relevanten Aufnahmebedingungen aufgenommen (102, 108), in einer digitalen Speichereinheit wenigstens temporär gespeichert und wenigstens ausschnittweise nach vorgegebenen Regeln miteinander zur Erzeugung eines Ergebnisbildes oder -wertes verrechnet (126) werden,
**dadurch gekennzeichnet, dass**
- in einem Referenzbild anhand von Bildinformationsparametern eine Interessenregion ROI definiert und ihre Position und / oder Form in einem ersten Einzelbild ermittelt wird (104),
- in einem zweiten Einzelbild die Position und / oder Form der ROI anhand der gleichen Bildinformationsparameter ermittelt wird (112),
- das zweite Einzelbild durch Translation, Rotation, Stauchung und / oder Streckung wenigstens ausschnittweise derart korrigiert wird (122), dass die Position und / oder Form der ROI in dem zweiten Einzelbild mit der Position und / oder Form der ROI in dem ersten Einzelbild übereinstimmt, und
- korrespondierende Bildpunkte oder -bereiche der positions- und / oder formkorrigierten Einzelbilder miteinander zur Erzeugung des Ergebnisbildes oder -wertes verrechnet werden (126).

2. Verfahren nach Anspruch 1,
**dadurch gekennzeichnet, dass**
die Bildinformationsparameter eine Kontrast-, Intensitäts-, Farb- und / oder Forminformation einschließen.

3. Verfahren nach einem der vorangehenden Ansprüche,
**dadurch gekennzeichnet, dass**
zur Ermittlung der Position und / oder Form der ROI in einem Einzelbild ein Kantensuch-Bildverarbeitungsalgorithmus auf das Einzelbild angewendet wird.

4. Verfahren nach einem der vorangehenden Ansprüche,
**dadurch gekennzeichnet, dass**
unter Verwendung der in dem ersten Einzelbild ermittelten Position und / oder Form der ROI und der in dem zweiten Teilbild ermittelten Position und / oder Form der ROI eine auf ein drittes Einzelbild anzuwendende Positions-und / oder Formkorrektur interpoliert (118) oder extrapoliert wird.

5. Verfahren nach einem der vorangehenden Ansprüche,
**dadurch gekennzeichnet, dass**
die Verrechnung mehrerer Einzelbilder oder Ausschnitte davon eine mathematische Operation umfasst, die auf eine Folge von Daten angewendet wird, welche gemittelten oder aufsummierten Werten von Bildpunkten entsprechen, die zu miteinander korrespondierenden ROIs in mehreren positions- und / oder formkorrigierten Einzelbildern gehören.

6. Verfahren nach Anspruch 5,
**dadurch gekennzeichnet, dass**
in die Mittelung oder Summation von Bildpunktwerten in jedem Einzelbild nur solche Bildpunkte einbezogen werden, die einen vordefinierten Mindestabstand zur Außengrenze ihrer jeweiligen ROI einhalten oder überschreiten.

7. Verfahren nach einem der vorangehenden Ansprüche,
**dadurch gekennzeichnet, dass**
eine ROI aus mehreren, nicht zusammenhängenden Bildregionen besteht.

8. Verfahren nach einem der vorangehenden Ansprüche,
**dadurch gekennzeichnet, dass**
eine anhand von Bildinformationsparametern definierte ROI durch manuelle Interaktion über eine graphische Benutzerschnittstelle modifiziert wird.

9. Verfahren nach einem der vorangehenden Ansprüche,
**dadurch gekennzeichnet, dass**
im Fall, dass eine in einem Einzelbild zu ermittelnde ROI nicht vollständig in den Grenzen des Einzelbildes enthalten ist, dieses Einzelbild verworfen und ein Alternativ-Einzelbild aufgenommen und dem weiteren Verfahren zugrunde gelegt wird, wobei vor Aufnahme des Alternativ-Einzelbildes eine automatische Repositionierung des Objektes erfolgt, sodass die in dem Alternativ-Einzelbild zu ermittelnde ROI vollständig innerhalb des Alternativ-Einzelbildes liegt.

10. Verfahren nach einem der vorangehenden Ansprüche,
**dadurch gekennzeichnet, dass**
jedes Einzelbild aus einer Mehrzahl von Teilbildern zusammengesetzt ist, wobei vor dem Zusammensetzen der Teilbilder
- in einem Referenzbild anhand von Bildinformationsparametern eine Interessenregion ROI definiert und ihre Position und / oder Form in einem ersten Teilbild ermittelt wird,
- in einem zweiten Teilbild die Position und / oder Form der ROI anhand der gleichen Bildinformationsparameter ermittelt wird und
- das zweite Teilbild durch Translation, Rotation, Stauchung und / oder Streckung wenigstens ausschnittweise derart korrigiert wird, dass die Position und / oder Form der ROI in dem zweiten Teilbild mit der Position und / oder Form der ROI in dem ersten Teilbild übereinstimmt.

11. Verfahren nach einem der vorangehenden Ansprüche,
**dadurch gekennzeichnet, dass**
zwischen den Aufnahmen zweier Einzelbilder jeweils ein Einfallwinkel eines Objektbeleuchtungslichtes, dessen spektrale Zusammensetzung und / oder dessen Polarisationseigenschaften verändert werden.
